# EUROPEAN PATENT APPLICATION

(11) **EP 4 345 722 A1**
(43) Date of publication of application: **03.04.2024**
(21) Application number: 22885734.8
(22) Date of filing: 18.10.2022
(51) Int. Cl.: G06Q 20/32, G06Q 40/04

(54) **OFFLINE TRANSACTION PROCESSING**

(30) Priority: 28.10.2021 CN 202111266627
(71) Applicant: Alipay (Hangzhou) Information Technology Co., Ltd., Hangzhou, Zhejiang 310000 (CN)
(72) Inventor: XU, Dengwei, Hangzhou, Zhejiang 310000 (CN); XIN, Zhi, Hangzhou, Zhejiang 310000 (CN); WAN, Xiaofei, Hangzhou, Zhejiang 310000 (CN); ZHENG, Xianyi, Hangzhou, Zhejiang 310000 (CN); YUAN, Wei, Hangzhou, Zhejiang 310000 (CN)
(74) Representative: Fish & Richardson P.C.
(86) International application number: PCT/CN2022/125805
(87) International publication number: WO 2023/071856

(57) **Abstract**

Embodiments of this specification disclose an offline transaction processing method, apparatus, and device. The method is applied to a first terminal of a transaction initiator. The method includes the following: Information about a current network connection status of the first terminal is obtained for a target transaction; if the current network connection status of the first terminal is connected, and it is determined that a network connection status of a second terminal of a transaction target party of the target transaction is unconnected, or the current network connection status of the first terminal is unconnected, it is determined whether the first terminal can output a transaction identification code used to trigger offline transaction processing on the target transaction; and an offline transaction policy corresponding to a determining result is selected based on the determining result indicating whether the first terminal can output the transaction identification code, and offline transaction processing is performed on the target transaction between the second terminal based on the selected offline transaction policy.

## Description

### TECHNICAL FIELD

This specification relates to the field of computer technologies, and in particular, to offline transaction processing methods, apparatuses, and devices.

### BACKGROUND

Use of offline transactions in a state of no network connection is an important supplement to online transactions. Currently, the offline transactions are still in an initial development and user education phase. Commonly used offline transaction methods can include performing offline transaction processing by scanning graphic codes (for example, two-dimensional codes) of offline transactions, performing offline transaction processing through near field communication, performing offline transaction processing by using offline voiceprints, performing offline transaction processing by using Bluetooth, etc. However, the above-mentioned offline transaction processing methods are respectively provided by different institutions or applications, that is, different institutions or applications are set with specified offline transaction methods provided by the different institutions or applications to users for use. Therefore, if a user needs to implement an offline transaction, a transaction can be completed only by using an offline transaction method set by a financial institution corresponding to a transaction method used by the user. If the user needs to use a certain offline transaction method, an application provided by a financial institution corresponding to the offline transaction method needs to be installed. In this case, transaction efficiency is low and a transaction success rate is low. If the user does not install the application, the user needs to perform operations such as downloading, installation, and account registration. Consequently, the transaction efficiency and the transaction success rate are further reduced. Therefore, a technical solution for selecting and using different offline transaction methods for different scenarios needs to be provided.

### SUMMARY

An objective of the embodiments of this specification is to provide a technical solution for selecting and using different offline transaction methods for different scenarios.

To implement the above-mentioned technical solution, the embodiments of this specification are implemented as follows: Some embodiments of this specification provide an offline transaction processing method. The method is applied to a first terminal of a transaction initiator. The method includes the following: Information about a current network connection status of the first terminal is obtained for a target transaction; if the current network connection status of the first terminal is connected, and it is determined that a network connection status of a second terminal of a transaction target party of the target transaction is unconnected, or the current network connection status of the first terminal is unconnected, it is determined whether the first terminal can output a transaction identification code used to trigger offline transaction processing on the target transaction; and an offline transaction policy corresponding to a determining result is selected based on the determining result indicating whether the first terminal can output the transaction identification code, and offline transaction processing is performed on the target transaction between the second terminal based on the selected offline transaction policy.

Some embodiments of this specification provide an offline transaction processing apparatus. The apparatus includes: a network status acquisition module, configured to obtain information about a current network connection status of the apparatus for a target transaction; a determining module, configured to: if the current network connection status of the apparatus is connected, and it is determined that a network connection status of a second terminal of a transaction target party of the target transaction is unconnected, or the current network connection status of the apparatus is unconnected, determine whether the apparatus can output a transaction identification code used to trigger offline transaction processing on the target transaction; and an offline transaction module, configured to select, based on a determining result indicating whether the apparatus can output the transaction identification code, an offline transaction policy corresponding to the determining result, and perform offline transaction processing on the target transaction between the second terminal based on the selected offline transaction policy.

Some embodiments of this specification provide an offline transaction processing device. The offline transaction processing device is provided with a trusted execution environment, and includes a processor and a storage configured to store computer-executable instructions. When the executable instructions are executed, the processor is enabled to perform the following operations: obtaining information about a current network connection status of the offline transaction processing device for a target transaction; if the current network connection status of the offline transaction processing device is connected, and it is determined that a network connection status of a second terminal of a transaction target party of the target transaction is unconnected, or the current network connection status of the offline transaction processing device is unconnected, determining whether the offline transaction processing device can output a transaction identification code used to trigger offline transaction processing on the target transaction; and selecting, based on a determining result indicating whether the offline transaction processing device can output the transaction identification code, an offline transaction policy corresponding to the determining result, and performing offline transaction processing on the target transaction between the second terminal based on the selected offline transaction policy.

Some embodiments of this specification further provide a storage medium. The storage medium is configured to store computer-executable instructions. When the executable instructions are executed, the following procedure is implemented: obtaining information about a current network connection status of a first terminal for a target transaction; if the current network connection status of the first terminal is connected, and it is determined that a network connection status of a second terminal of a transaction target party of the target transaction is unconnected, or the current network connection status of the first terminal is unconnected, determining whether the first terminal can output a transaction identification code used to trigger offline transaction processing on the target transaction; and selecting, based on a determining result indicating whether the first terminal can output the transaction identification code, an offline transaction policy corresponding to the determining result, and performing offline transaction processing on the target transaction between the second terminal based on the selected offline transaction policy.

### BRIEF DESCRIPTION OF DRAWINGS

To describe the technical solutions in the embodiments of this specification or in the existing technology more clearly, the following briefly describes the accompanying drawings needed for describing the embodiments or the existing technology. Clearly, the accompanying drawings in the following descriptions merely show some embodiments of this specification, and a person of ordinary skill in the art can still derive other drawings from these accompanying drawings without creative efforts.
FIG. 1 illustrates an embodiment of an offline transaction processing method, according to this specification;
FIG. 2 is a schematic diagram illustrating a structure of an offline transaction processing system, according to this specification;
FIG. 3 illustrates an embodiment of another offline transaction processing method, according to this specification;
FIG. 4 is a schematic diagram illustrating an offline transaction processing process, according to this specification;
FIG. 5 illustrates an embodiment of an offline transaction processing apparatus, according to this specification; and
FIG. 6 illustrates an embodiment of an offline transaction processing device, according to this specification.

### DESCRIPTION OF EMBODIMENTS

Embodiments of this specification provide offline transaction processing methods, apparatuses, and devices.

To make a person skilled in the art better understand the technical solutions in this specification, the following clearly and comprehensively describes the technical solutions in the embodiments of this specification with reference to the accompanying drawings in the embodiments of this specification. Clearly, the described embodiments are merely some but not all of the embodiments of this specification. All other embodiments obtained by a person of ordinary skill in the art based on the embodiments of this specification without creative efforts shall fall within the protection scope of this specification.

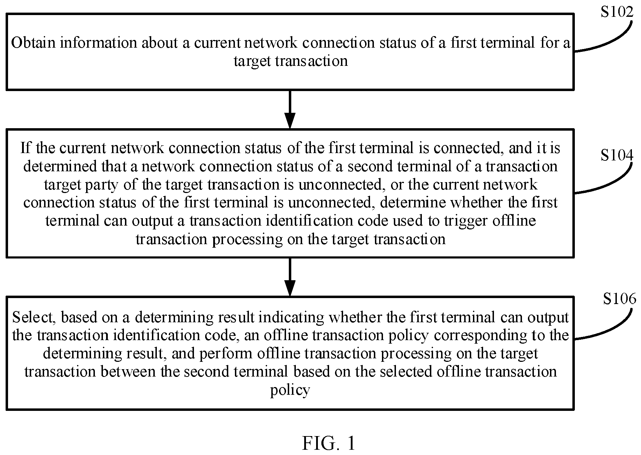

Embodiment 1: As shown in FIG. 1, this embodiment of this specification provides an offline transaction processing method. The method can be performed by a first terminal of a transaction initiator. The first terminal can be a mobile terminal device such as a mobile phone or a tablet computer, or can be a computer device such as a notebook computer or a desktop computer. The method can specifically include the following steps.

Step S102: Obtain information about a current network connection status of the first terminal for a target transaction.

The target transaction can be any transaction. For example, a user purchases a product in an offline store opened by a merchant. The user makes settlement with the merchant on the purchased product by using a payment application, etc. installed in the first terminal of the user, to constitute a transaction. This can be specifically set based on an actual situation. This is not limited in this embodiment of this specification. The network connection status can be used to represent a network connection status of the terminal device. The network connection status can include an unconnected state, a connected state, etc. The first terminal can be a terminal device used by the transaction initiator. The first terminal can be a mobile terminal device such as a mobile phone or a tablet computer, or can be a computer device such as a notebook computer or a desktop computer.

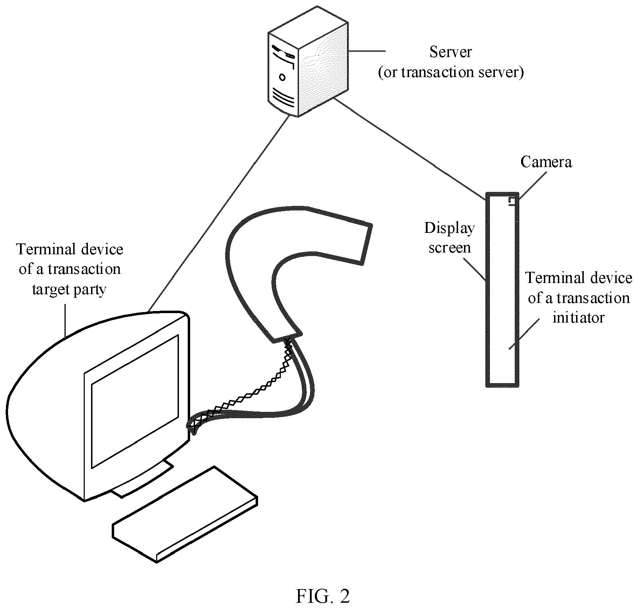

In implementation, use of offline transactions in a state of no network connection is an important supplement to online transactions. Currently, the offline transactions are still in an initial development and user education phase. Commonly used offline transaction methods can include performing offline transaction processing by scanning graphic codes (for example, two-dimensional codes) of offline transactions, performing offline transaction processing through near field communication, performing offline transaction processing by using offline voiceprints, performing offline transaction processing by using Bluetooth, etc. However, the above-mentioned offline transaction processing methods are respectively provided by different institutions or applications, that is, different institutions or applications are set with specified offline transaction methods provided by the different institutions or applications to users for use. For example, some financial institutions provide a method for performing offline transaction processing by scanning graphic codes of offline transactions to users, some other financial institutions provide a method for performing offline transaction processing through near field communication to users, and some financial institutions provide a method for performing offline transaction processing by using Bluetooth to users. Therefore, if a user needs to implement an offline transaction, a transaction can be completed only by using an offline transaction method set by a financial institution corresponding to a transaction method used by the user. If the user needs to use a certain offline transaction method, an application provided by a financial institution corresponding to the offline transaction method needs to be installed. In this case, transaction efficiency is low and a transaction success rate is low. If the user does not install the application, the user needs to perform operations such as downloading, installation, and account registration. Consequently, the transaction efficiency and the transaction success rate are further reduced. Therefore, a technical solution for selecting and using different offline transaction methods for different scenarios needs to be provided. This embodiment of this specification provides an implementable technical solution, and can specifically include the following content: The offline transaction can be a transaction implemented when terminal devices used by both of two parties of the transaction are in an offline state (that is, not connected to a network, cannot be connected to a network, etc.), or can be a transaction implemented when a terminal device used by either of two parties of the transaction is in an offline state. As shown in FIG. 2, for the terminal device (namely, the first terminal) of the transaction initiator, the transaction initiator can select a transaction object for which a transaction needs to be implemented (for example, the transaction initiator can select a product that needs to be purchased from an online store), and after selecting the transaction object, can provide the selected object to a settlement manager, and the manager can calculate a transfer resource (for example, an amount to be paid) needed for the selected object. After calculation is completed, the transaction initiator needs to provide information about an account for resource transfer by using the first terminal of the transaction initiator to the manager. In this case, the information about the current network connection status can be obtained. There can be a plurality of methods for obtaining the information about the network connection status. For example, the first terminal can periodically or aperiodically detect the network connection status of the first terminal, and record the information about the network connection status of the first terminal.

In addition, the first terminal can synchronize the information about the network connection status of the first terminal to a specified server (for example, a transaction server). If duration in which the information about the network connection status of the first terminal is not updated exceeds a predetermined duration threshold, the network connection status of the first terminal can be set to unconnected, that a network connection is disconnected, etc. Alternatively, a specified server can periodically or aperiodically send a heartbeat request or a detection request for a network connection to the first terminal. The first terminal can send the information about the network connection status of the first terminal to the specified server, and the specified server can record the information about the network connection status. If the specified server does not receive the information about the network connection status of the first terminal within predetermined duration, the network connection status of the first terminal can be set to unconnected, that a network connection is disconnected, etc. This can be specifically set based on an actual situation. This is not limited in this embodiment of this specification.

Step S 104: If the current network connection status of the first terminal is connected, and it is determined that a network connection status of a second terminal of a transaction target party of the target transaction is unconnected, or the current network connection status of the first terminal is unconnected, determine whether the first terminal can output a transaction identification code used to trigger offline transaction processing on the target transaction.

The transaction target party can be a party that provides a transaction object to the user of the first terminal. The transaction object can be an object for which a transaction needs to be implemented, for example, a product. The transaction target party can be a merchant, etc. The second terminal can be a mobile terminal device such as a mobile phone or a tablet computer, can be a computer device such as a notebook computer or a desktop computer, or can be a POS machine or a cash register. This can be specifically set based on an actual situation. This is not limited in this embodiment of this specification. The transaction identification code can be used to provide information about an account that needs to be used to implement a transaction, etc. In actual application, an encoding method can be predetermined, and encoding processing is performed on the information of the account by using the encoding method, to obtain a corresponding encoding result. The encoding result can be used as the transaction identification code, and the transaction identification code can include a plurality of different presentation methods. For example, the transaction identification code can be a graphic code (specifically, a two-dimensional code or a barcode), or the transaction identification code can be a code (for example, a voiceprint feature code or a facial feature code) obtained by encoding a biometric feature of the user. This can be specifically set based on an actual situation. This is not limited in this embodiment of this specification.

In implementation, the second terminal can also periodically or aperiodically detect the network connection status of the second terminal, and record information about the network connection status of the second terminal. In addition, the second terminal can synchronize the information about the network connection status of the second terminal to a specified server. If duration in which the information about the network connection status of the second terminal is not updated exceeds a predetermined duration threshold, the network connection status of the second terminal can be set to unconnected, that a network connection is disconnected, etc. Alternatively, a specified server can periodically or aperiodically send a heartbeat request or a detection request for a network connection to the second terminal. The second terminal can send the information about the network connection status of the second terminal to the specified server, and the specified server can record the information about the network connection status. If the specified server does not receive the information about the network connection status of the second terminal within predetermined duration, the network connection status of the second terminal can be set to unconnected, that a network connection is disconnected, etc. This can be specifically set based on an actual situation. This is not limited in this embodiment of this specification.

If the first terminal detects that the current network connection status is connected, the first terminal can send, to the specified server, a request for obtaining the information about the network connection status of the second terminal, and the specified server can send the information about the network connection status of the second terminal to the first terminal. If the network connection status of the second terminal is unconnected, the first terminal can determine that an offline transaction needs to be implemented. In this case, a processing process of generating the transaction identification code used to perform offline transaction processing on the target transaction and a working status (for example, a payload status of a processor and a storage status of a storage) of each involved component can be detected. In addition, a processing process of outputting the transaction identification code and a working status (for example, a working status of a display component and the payload status of the processor) of each involved component can be further detected. The above-mentioned detection processing is performed, so that it can be determined whether the first terminal can output the transaction identification code used to trigger offline transaction processing on the target transaction. For example, if one or more of the above-mentioned processing processes are abnormal, and/or one or more of the above-mentioned involved components are abnormal, it can be determined that the first terminal cannot output the transaction identification code used to trigger offline transaction processing on the target transaction. Otherwise, the first terminal can output the transaction identification code used to trigger offline transaction processing on the target transaction. This can be specifically set based on an actual situation. This is not limited in this embodiment of this specification.

In addition, if the first terminal detects that the current network connection status is unconnected, the first terminal can determine that an offline transaction needs to be implemented. In this case, a processing process of generating the transaction identification code used to perform offline transaction processing on the target transaction and a working status of each involved component can be detected. In addition, a processing process of outputting the transaction identification code and a working status of each involved component can be further detected. The above-mentioned detection processing is performed, so that it can be determined whether the first terminal can output the transaction identification code used to trigger offline transaction processing on the target transaction. This can be specifically set based on an actual situation. This is not limited in this embodiment of this specification.

Step S 106: Select, based on a determining result indicating whether the first terminal can output the transaction identification code, an offline transaction policy corresponding to the determining result, and perform offline transaction processing on the target transaction between the second terminal based on the selected offline transaction policy.

The offline transaction policy can be a transaction policy that includes related information such as an offline transaction method and an offline transaction processing procedure. There can be a plurality of offline transaction policies. For example, a policy for implementing an offline transaction by establishing a connection by using Bluetooth and a policy for implementing an offline transaction by establishing a connection by using a radio frequency signal (for example, an infrared signal) can be included. This can be specifically set based on an actual situation. This is not limited in this embodiment of this specification.

In implementation, different offline transaction policies can be constructed in advance based on an actual situation, and the constructed offline transaction policies can be stored in a specified storage device or blockchain system. If it is determined, based on the determining result, that the first terminal can output the transaction identification code, the offline transaction policy corresponding to the determining result can be selected from the storage device or the blockchain system, and offline transaction processing is performed between the first terminal and the second terminal based on the selected offline transaction policy. For example, if it is determined, based on the determining result, that the first terminal can output the transaction identification code, the first terminal can output the transaction identification code. The second terminal can collect the transaction identification code by using a decoding and identification component of the transaction identification code, and then can establish a specified connection (for example, establish a connection by using Bluetooth or establish a connection by using a specified local area network) to the first terminal. By using the connection, offline transaction processing can be performed between the first terminal and the second terminal (that is, the second terminal parses the transaction identification code, to obtain account information of the transaction initiator, and can perform resource transfer processing based on the account information and transaction information of the target transaction, and after resource transfer processing succeeds, the second terminal can send a resource transfer processing success notification message to the first terminal).

According to the offline transaction processing method provided in this embodiment of this specification, the first terminal of the transaction initiator obtains the information about the current network connection status of the first terminal for the target transaction; if the current network connection status of the first terminal is connected, and it is determined that the network connection status of the second terminal of the transaction target party of the target transaction is unconnected, or the current network connection status of the first terminal is unconnected, determines whether the first terminal can output the transaction identification code used to trigger offline transaction processing on the target transaction; and then selects, based on the determining result indicating whether the first terminal can output the transaction identification code, the offline transaction policy corresponding to the determining result, and performs offline transaction processing on the target transaction between the second terminal based on the selected offline transaction policy. In this way, an offline transaction method that is most suitable for a current status can be adaptively selected based on the network connection status of the first terminal of the transaction initiator, a payment scenario, and a payment environment, to improve offline transaction efficiency and an offline transaction success rate and greatly improve transaction experience of the user.

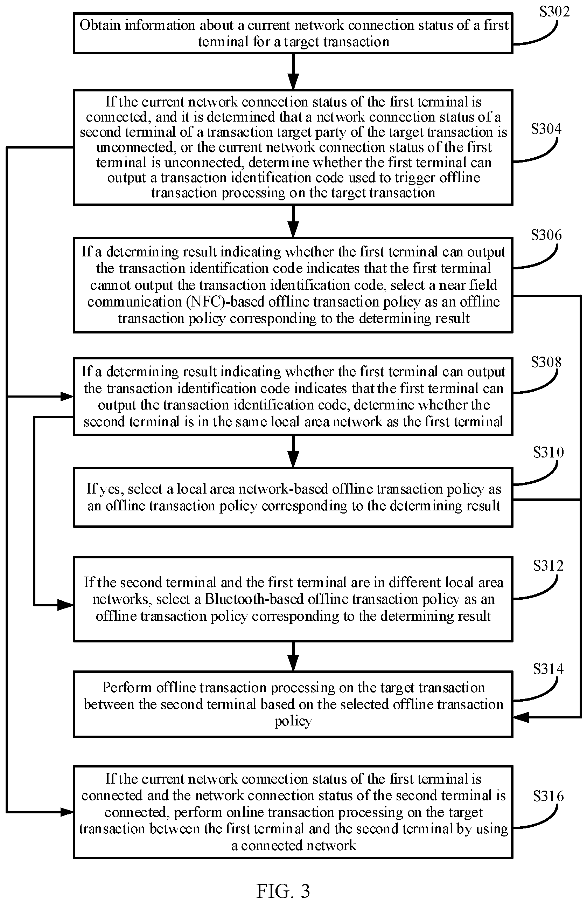

Embodiment 2: As shown in FIG. 3, this embodiment of this specification provides an offline transaction processing method. The method can be performed by a first terminal of a transaction initiator. The first terminal can be a mobile terminal device such as a mobile phone or a tablet computer, or can be a computer device such as a notebook computer or a desktop computer. The method can specifically include the following steps.

Step S302: Obtain information about a current network connection status of the first terminal for a target transaction.

Step S304: If the current network connection status of the first terminal is connected, and it is determined that a network connection status of a second terminal of a transaction target party of the target transaction is unconnected, or the current network connection status of the first terminal is unconnected, determine whether the first terminal can output a transaction identification code used to trigger offline transaction processing on the target transaction.

The transaction identification code can include a graphic code and a code of a biometric feature of a user of the first terminal. The graphic code can be a graphic that is distributed on a plane (that is, in a two-dimensional direction) by using a specific geometric pattern based on a specific rule and that records data symbol information, and can specifically include a two-dimensional code, a barcode, etc. There can be a plurality of biometric features, for example, a fingerprint feature, a palmprint feature, a facial feature, and a voiceprint feature. This can be specifically set based on an actual situation. This is not limited in this embodiment of this specification.

For specific processing processes of step S302 and step S304, references can be made to related content in Embodiment 1. Details are omitted here for simplicity.

In addition, in actual application, the offline transaction policy involved in Embodiment 1 can include one or more of a near field communication (NFC)-based offline transaction policy, a Bluetooth-based offline transaction policy, and a local area network-based offline transaction policy.

Based on the above-mentioned content, there can be various types of specific processing in step S 106 in Embodiment 1. The following provides three optional processing methods, which can specifically include processing in the following steps S306 to S314.

Step S306: If the determining result indicating whether the first terminal can output the transaction identification code indicates that the first terminal cannot output the transaction identification code, select the NFC-based offline transaction policy as the offline transaction policy corresponding to the determining result.

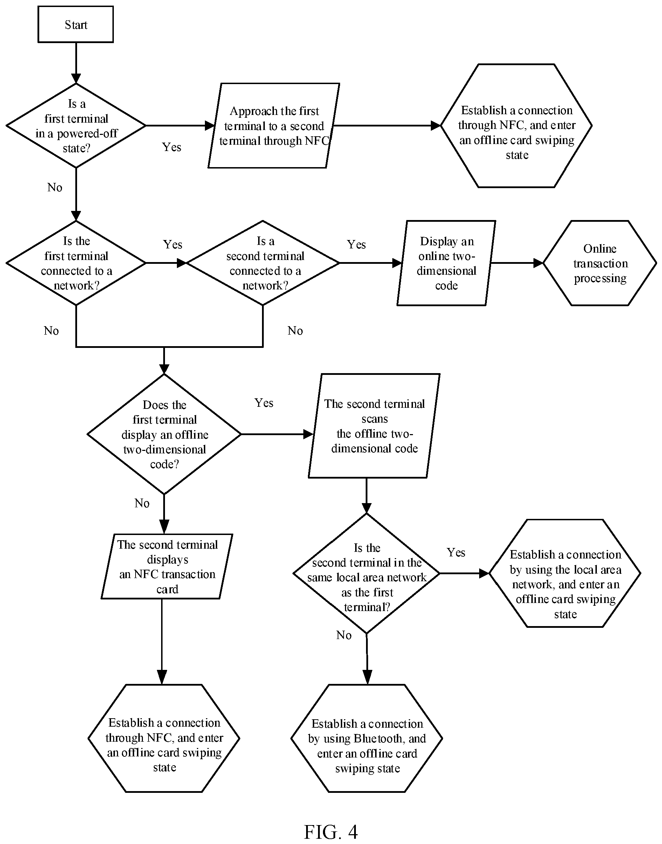

In implementation, as shown in FIG. 4, if the determining result indicates that the first terminal cannot output the transaction identification code, it indicates that the second terminal cannot implement the current offline transaction by identifying the transaction identification code, but only another method can be selected. In addition, considering that the first terminal and the second terminal need to implement the offline transaction, the current offline transaction can be implemented through near field communication. Specifically, the NFC-based offline transaction policy can be selected from a storage device or a blockchain system that stores the offline transaction policy, and the NFC-based offline transaction policy can be used as the offline transaction policy corresponding to the determining result.

There can be various types of specific processing in step S306. The following provides an optional processing method. Specifically, the following content can be included: If the determining result indicating whether the first terminal can output the transaction identification code indicates that the first terminal is in a powered-off state, the NFC-based offline transaction policy is selected as the offline transaction policy corresponding to the determining result.

In implementation, as shown in FIG. 4, if the determining result indicates that the first terminal is in the powered-off state, it can be determined that the first terminal cannot output the transaction identification code. In this case, specific processing in step S306 can be performed.

In addition to implementing the processing in step S 106 by using the above-mentioned method, the processing in step S 106 can be implemented by using the following method. Specifically, the following related content can be included.

Step S308: If the determining result indicating whether the first terminal can output the transaction identification code indicates that the first terminal can output the transaction identification code, determine whether the second terminal is in the same local area network as the first terminal.

In implementation, as shown in FIG. 4, if the determining result indicates that the first terminal can output the transaction identification code, the first terminal can output the transaction identification code (specifically, for example, display a graphic code, output voiceprint information (which can be text, a graphic, audio data, etc.), or output a code of the facial feature). The second terminal can collect the transaction identification code by using a decoding and identification component of the transaction identification code. Then, it is determined whether the second terminal is in the same local area network as the first terminal. For example, a current device list can be obtained from a gateway, to determine whether information about the second terminal is included. If yes, it is determined that the second terminal is in the same local area network as the first terminal. Otherwise, the second terminal is not in the same local area network as the first terminal.

Step S310: If yes, select the local area network-based offline transaction policy as the offline transaction policy corresponding to the determining result.

In implementation, as shown in FIG. 4, if it is determined that the second terminal is in the same local area network as the first terminal, the local area network-based offline transaction policy can be selected from a storage device or a blockchain system that stores the offline transaction policy, and the local area network-based offline transaction policy can be used as the offline transaction policy corresponding to the determining result.

Step S312: If the second terminal and the first terminal are in different local area networks, select the Bluetooth-based offline transaction policy as the offline transaction policy corresponding to the determining result.

In implementation, as shown in FIG. 4, if it is determined that the second terminal is not in the same local area network as the first terminal, the current offline transaction can be implemented by selecting a method for establishing a connection by using Bluetooth. Specifically, the Bluetooth-based offline transaction policy can be selected from a storage device or a blockchain system that stores the offline transaction policy, and the Bluetooth-based offline transaction policy can be used as the offline transaction policy corresponding to the determining result.

Step S314: Perform offline transaction processing on the target transaction between the second terminal based on the selected offline transaction policy.

In implementation, as shown in FIG. 4, if the selected offline transaction policy is the NFC-based offline transaction policy, the transaction initiator can approach the first terminal to the second terminal, and establish a communication connection to the second terminal by using an NFC module in the first terminal. The NFC module can include a secure element (SE), a contactless front end CLF (or referred to as an NFC controller), a radio frequency antenna, etc. By using the above-mentioned component in the NFC module, a communication connection can be established between the first terminal and the second terminal, and secure data interaction can be performed to finally complete the offline transaction.

If the selected offline transaction policy is the Bluetooth-based offline transaction policy, the transaction initiator can enable Bluetooth in the first terminal. In addition, the transaction target party can enable Bluetooth in the second terminal. Then, a Bluetooth connection can be established between the first terminal and the second terminal, a communication connection is established between the Bluetooth in the first terminal and the Bluetooth in the second terminal, and data exchange can be performed between the first terminal and the second terminal based on the established Bluetooth communication connection, to finally complete the offline transaction.

If the selected offline transaction policy is the local area network-based offline transaction policy, the first terminal of the transaction initiator can establish a communication connection to the second terminal by using a gateway of a local area network, then the first terminal can send information that needs to be sent to the second terminal to the gateway, and the gateway then forwards the information to the second terminal. Similarly, the second terminal can send information that needs to be returned to the first terminal to the gateway, and the gateway then forwards the information to the first terminal. The offline transaction can be finally completed between the first terminal and the second terminal based on the above-mentioned interaction process.

Step S316: If the current network connection status of the first terminal is connected and the network connection status of the second terminal is connected, perform online transaction processing on the target transaction between the first terminal and the second terminal by using a connected network.

In implementation, as shown in FIG. 4, if the current network connection status of the first terminal is connected and the network connection status of the second terminal is connected, the first terminal can display an online transaction identification code (for example, an online graphic code). The second terminal can collect the online transaction identification code by using a decoding and identification component of the transaction identification code, then can parse the online transaction identification code to obtain account information of the transaction initiator, and can send the account information and the transaction information of the target transaction to the server. The server can perform resource transfer processing (for example, make a transfer or payment) based on the account information and the transaction information of the target transaction. After the resource transfer processing succeeds, the server can send a resource transfer processing success notification message to the second terminal and the first terminal.

According to the offline transaction processing method provided in this embodiment of this specification, the first terminal of the transaction initiator obtains the information about the current network connection status of the first terminal for the target transaction; if the current network connection status of the first terminal is connected, and it is determined that the network connection status of the second terminal of the transaction target party of the target transaction is unconnected, or the current network connection status of the first terminal is unconnected, determines whether the first terminal can output the transaction identification code used to trigger offline transaction processing on the target transaction; and then selects, based on the determining result indicating whether the first terminal can output the transaction identification code, the offline transaction policy corresponding to the determining result, and performs offline transaction processing on the target transaction between the second terminal based on the selected offline transaction policy. In this way, an offline transaction method that is most suitable for a current status can be adaptively selected based on the network connection status of the first terminal of the transaction initiator, a payment scenario, and a payment environment, to improve offline transaction efficiency and an offline transaction success rate and greatly improve transaction experience of the user.

In addition, subsequent transaction processing can be performed based on an interaction method (NFC or the transaction identification code (for example, a two-dimensional code)) selected by the user, a current network environment (local area network or Bluetooth) can be automatically detected, and a proper networking method can be selected to establish a communication connection, to further improve the transaction success rate and the transaction efficiency.

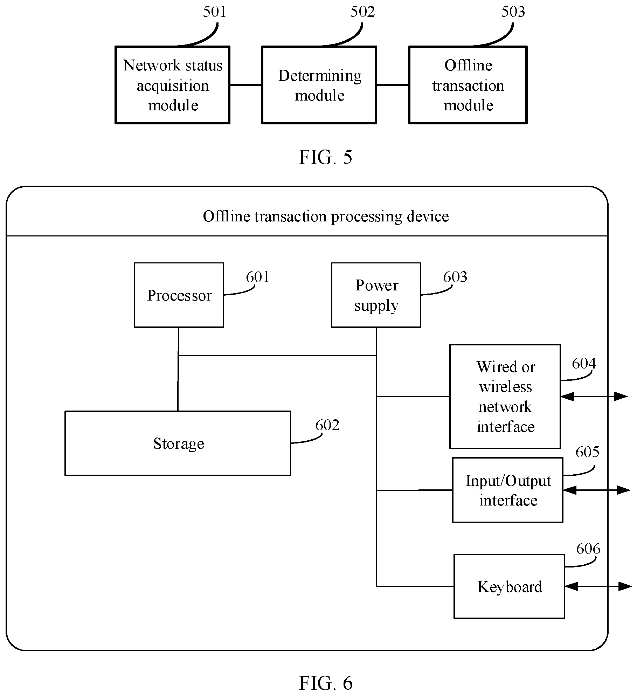

Embodiment 3: The offline transaction processing method provided in the embodiments of this specification is described above. Based on the same idea, this embodiment of this specification further provides an offline transaction processing apparatus, as shown in FIG. 5.

The offline transaction processing apparatus includes a network status acquisition module 501, a determining module 502, and an offline transaction module 503. The network status acquisition module 501 is configured to obtain information about a current network connection status of the apparatus for a target transaction. The determining module 502 is configured to: if the current network connection status of the apparatus is connected, and it is determined that a network connection status of a second terminal of a transaction target party of the target transaction is unconnected, or the current network connection status of the apparatus is unconnected, determine whether the apparatus can output a transaction identification code used to trigger offline transaction processing on the target transaction. The offline transaction module 503 is configured to select, based on a determining result indicating whether the apparatus can output the transaction identification code, an offline transaction policy corresponding to the determining result, and perform offline transaction processing on the target transaction between the second terminal based on the selected offline transaction policy.

In this embodiment of this specification, the transaction identification code includes a graphic code and a code of a biometric feature of a user of the apparatus.

In this embodiment of this specification, the offline transaction policy includes one or more of a near field communication (NFC)-based offline transaction policy, a Bluetooth-based offline transaction policy, and a local area network-based offline transaction policy.

In this embodiment of this specification, the offline transaction module 503 is configured to select the NFC-based offline transaction policy as the offline transaction policy corresponding to the determining result if the determining result indicates that the apparatus cannot output the transaction identification code.

In this embodiment of this specification, the offline transaction module 503 is configured to select the NFC-based offline transaction policy as the offline transaction policy corresponding to the determining result if the determining result indicates that the apparatus is in a powered-off state.

In this embodiment of this specification, the offline transaction module 503 includes: a determining unit, configured to: if the determining result indicates that the apparatus can output the transaction identification code, determine whether the second terminal is in the same local area network as the apparatus; and a transaction policy determining unit, configured to: if yes, select the local area network-based offline transaction policy as the offline transaction policy corresponding to the determining result.

In this embodiment of this specification, the apparatus further includes a transaction policy determining module, configured to: if the second terminal and the apparatus are in different local area networks, select the Bluetooth-based offline transaction policy as the offline transaction policy corresponding to the determining result.

In this embodiment of this specification, the apparatus further includes an online transaction module, configured to: if the current network connection status of the apparatus is connected and the network connection status of the second terminal is connected, perform online transaction processing on the target transaction between the apparatus and the second terminal by using a connected network.

According to the offline transaction processing apparatus provided in this embodiment of this application, the information about the current network connection status of the offline transaction processing apparatus is obtained for the target transaction; if the current network connection status of the offline transaction processing apparatus is connected, and it is determined that the network connection status of the second terminal of the transaction target party of the target transaction is unconnected, or the current network connection status of the offline transaction processing apparatus is unconnected, it is determined whether the offline transaction processing apparatus can output the transaction identification code used to trigger offline transaction processing on the target transaction; and then the offline transaction policy corresponding to the determining result is selected based on the determining result indicating whether the offline transaction processing apparatus can output the transaction identification code, and offline transaction processing is performed on the target transaction between the second terminal based on the selected offline transaction policy. In this way, an offline transaction method that is most suitable for a current status can be adaptively selected based on the network connection status of the offline transaction processing apparatus of a transaction initiator, a payment scenario, and a payment environment, to improve offline transaction efficiency and an offline transaction success rate and greatly improve transaction experience of the user.

In addition, subsequent transaction processing can be performed based on an interaction method (NFC or the transaction identification code (for example, a two-dimensional code)) selected by the user, a current network environment (local area network or Bluetooth) can be automatically detected, and a proper networking method can be selected to establish a communication connection, to further improve the transaction success rate and the transaction efficiency.

Embodiment 4: The offline transaction processing apparatus provided in the embodiments of this specification is described above. Based on the same idea, this embodiment of this specification further provides an offline transaction processing device, as shown in FIG. 6.

The offline transaction processing device can be the first terminal provided in the above-mentioned embodiments.

The offline transaction processing device can vary greatly based on configuration or performance, and can include one or more processors 601 and a storage 602. The storage 602 can store one or more storage applications or data. The storage 602 can be a temporary storage or a persistent storage. The application stored in the storage 602 can include one or more modules (not shown in the figure), and each module can include a series of computer-executable instructions in the offline transaction processing device. Further, the processor 601 can be configured to communicate with the storage 602, and execute a series of computer-executable instructions in the storage 602 on the offline transaction processing device. The offline transaction processing device can further include one or more power supplies 603, one or more wired or wireless network interfaces 604, one or more input/output interfaces 605, and one or more keyboards 606.

Specifically, in this embodiment, the offline transaction processing device includes a storage and one or more programs. The one or more programs are stored in the storage. The one or more programs can include one or more modules. Each module can include a series of computer-executable instructions in the offline transaction processing device. The one or more processors are configured to execute the one or more programs, to execute the following computer-executable instructions: obtaining information about a current network connection status of the offline transaction processing device for a target transaction; if the current network connection status of the offline transaction processing device is connected, and it is determined that a network connection status of a second terminal of a transaction target party of the target transaction is unconnected, or the current network connection status of the offline transaction processing device is unconnected, determining whether the offline transaction processing device can output a transaction identification code used to trigger offline transaction processing on the target transaction; and selecting, based on a determining result indicating whether the offline transaction processing device can output the transaction identification code, an offline transaction policy corresponding to the determining result, and performing offline transaction processing on the target transaction between the second terminal based on the selected offline transaction policy.

In this embodiment of this specification, the transaction identification code includes a graphic code and a code of a biometric feature of a user of the offline transaction processing device.

In this embodiment of this specification, the offline transaction policy includes one or more of a near field communication (NFC)-based offline transaction policy, a Bluetooth-based offline transaction policy, and a local area network-based offline transaction policy.

In this embodiment of this specification, the selecting, based on a determining result indicating whether the offline transaction processing device can output the transaction identification code, an offline transaction policy corresponding to the determining result includes: selecting the NFC-based offline transaction policy as the offline transaction policy corresponding to the determining result if the determining result indicates that the offline transaction processing device cannot output the transaction identification code.

In this embodiment of this specification, the selecting the NFC-based offline transaction policy as the offline transaction policy corresponding to the determining result if the determining result indicates that the offline transaction processing device cannot output the transaction identification code includes: selecting the NFC-based offline transaction policy as the offline transaction policy corresponding to the determining result if the determining result indicates that the offline transaction processing device is in a powered-off state.

In this embodiment of this specification, the selecting, based on a determining result indicating whether the offline transaction processing device can output the transaction identification code, an offline transaction policy corresponding to the determining result includes: if the determining result indicates that the offline transaction processing device can output the transaction identification code, determining whether the second terminal is in the same local area network as the offline transaction processing device; and if yes, selecting the local area network-based offline transaction policy as the offline transaction policy corresponding to the determining result.

In this embodiment of this specification, the following content is further included: if the second terminal and the offline transaction processing device are in different local area networks, selecting the Bluetooth-based offline transaction policy as the offline transaction policy corresponding to the determining result.

In this embodiment of this specification, the following content is further included: if the current network connection status of the offline transaction processing device is connected and the network connection status of the second terminal is connected, performing online transaction processing on the target transaction between the offline transaction processing device and the second terminal by using a connected network.

According to the offline transaction processing device provided in this embodiment of this application, the information about the current network connection status of the offline transaction processing device is obtained for the target transaction; if the current network connection status of the offline transaction processing device is connected, and it is determined that the network connection status of the second terminal of the transaction target party of the target transaction is unconnected, or the current network connection status of the offline transaction processing device is unconnected, it is determined whether the offline transaction processing device can output the transaction identification code used to trigger offline transaction processing on the target transaction; and then the offline transaction policy corresponding to the determining result is selected based on the determining result indicating whether the offline transaction processing device can output the transaction identification code, and offline transaction processing is performed on the target transaction between the second terminal based on the selected offline transaction policy. In this way, an offline transaction method that is most suitable for a current status can be adaptively selected based on the network connection status of the offline transaction processing device of a transaction initiator, a payment scenario, and a payment environment, to improve offline transaction efficiency and an offline transaction success rate and greatly improve transaction experience of the user.

In addition, subsequent transaction processing can be performed based on an interaction method (NFC or the transaction identification code (for example, a two-dimensional code)) selected by the user, a current network environment (local area network or Bluetooth) can be automatically detected, and a proper networking method can be selected to establish a communication connection, to further improve the transaction success rate and the transaction efficiency.

Embodiment 5: Further, based on the method shown in FIG. 1 to FIG. 4, one or more embodiments of this specification further provide a storage medium, configured to store computer-executable instruction information. In a specific embodiment, the storage medium can be a USB flash drive, an optical disc, a hard disk, etc. When the computer-executable instruction information stored in the storage medium is executed by a processor, the following procedure can be implemented: obtaining information about a current network connection status of a first terminal for a target transaction; if the current network connection status of the first terminal is connected, and it is determined that a network connection status of a second terminal of a transaction target party of the target transaction is unconnected, or the current network connection status of the first terminal is unconnected, determining whether the first terminal can output a transaction identification code used to trigger offline transaction processing on the target transaction; and selecting, based on a determining result indicating whether the first terminal can output the transaction identification code, an offline transaction policy corresponding to the determining result, and performing offline transaction processing on the target transaction between the second terminal based on the selected offline transaction policy.

In this embodiment of this specification, the transaction identification code includes a graphic code and a code of a biometric feature of a user of the first terminal.

In this embodiment of this specification, the offline transaction policy includes one or more of a near field communication (NFC)-based offline transaction policy, a Bluetooth-based offline transaction policy, and a local area network-based offline transaction policy.

In this embodiment of this specification, the selecting, based on a determining result indicating whether the first terminal can output the transaction identification code, an offline transaction policy corresponding to the determining result includes: selecting the NFC-based offline transaction policy as the offline transaction policy corresponding to the determining result if the determining result indicates that the first terminal cannot output the transaction identification code.

In this embodiment of this specification, the selecting the NFC-based offline transaction policy as the offline transaction policy corresponding to the determining result if the determining result indicates that the first terminal cannot output the transaction identification code includes: selecting the NFC-based offline transaction policy as the offline transaction policy corresponding to the determining result if the determining result indicates that the first terminal is in a powered-off state.

In this embodiment of this specification, the selecting, based on a determining result indicating whether the first terminal can output the transaction identification code, an offline transaction policy corresponding to the determining result includes: if the determining result indicates that the first terminal can output the transaction identification code, determining whether the second terminal is in the same local area network as the first terminal; and if yes, selecting the local area network-based offline transaction policy as the offline transaction policy corresponding to the determining result.

In this embodiment of this specification, the following content is further included: if the second terminal and the first terminal are in different local area networks, selecting the Bluetooth-based offline transaction policy as the offline transaction policy corresponding to the determining result.

In this embodiment of this specification, the following content is further included: if the current network connection status of the first terminal is connected and the network connection status of the second terminal is connected, performing online transaction processing on the target transaction between the first terminal and the second terminal by using a connected network.

According to the storage medium provided in this embodiment of this specification, the information about the current network connection status of the first terminal is obtained for the target transaction; if the current network connection status of the first terminal is connected, and it is determined that the network connection status of the second terminal of the transaction target party of the target transaction is unconnected, or the current network connection status of the first terminal is unconnected, it is determined whether the first terminal can output the transaction identification code used to trigger offline transaction processing on the target transaction; and then the offline transaction policy corresponding to the determining result is selected based on the determining result indicating whether the first terminal can output the transaction identification code, and offline transaction processing is performed on the target transaction between the second terminal based on the selected offline transaction policy. In this way, an offline transaction method that is most suitable for a current status can be adaptively selected based on the network connection status of the first terminal of a transaction initiator, a payment scenario, and a payment environment, to improve offline transaction efficiency and an offline transaction success rate and greatly improve transaction experience of the user.

In addition, subsequent transaction processing can be performed based on an interaction method (NFC or the transaction identification code (for example, a two-dimensional code)) selected by the user, a current network environment (local area network or Bluetooth) can be automatically detected, and a proper networking method can be selected to establish a communication connection, to further improve the transaction success rate and the transaction efficiency.

Specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence to achieve the desired results. In some implementations, multi-tasking and parallel processing are feasible or may be advantageous.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer performs programming to "integrate" a digital system to a PLD without requesting a chip manufacturer to design and produce an application-specific integrated circuit chip. In addition, currently, instead of manually manufacturing an integrated circuit chip, such programming is mostly implemented by using "logic compiler" software. The "logic compiler" software is similar to a software compiler used to develop and write a program. Original code needs to be written in a particular programming language before being compiled. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). At present, the Very-High-Speed Integrated Circuit Hardware Description Language (VHDL) and Verilog are most commonly used. It should also be clear to a person skilled in the art that a hardware circuit that implements a logical method procedure can be readily obtained once the method procedure is logically programmed by using the several hardware description languages described above and is programmed into an integrated circuit.

A controller can be implemented by using any proper method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The storage controller can also be implemented as a part of control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatuses are described by dividing functions into various units. Certainly, when one or more embodiments of this specification are implemented, functions of the units can be implemented in one or more pieces of software and/or hardware.

A person skilled in the art should understand that the embodiments of this specification can be provided as methods, systems, or computer program products. Therefore, the one or more embodiments of this specification can use a form of hardware only embodiments, software only embodiments, or embodiments with a combination of software and hardware. In addition, the one or more embodiments of this specification can use a form of a computer program product that is implemented on one or more computer-usable storage media (including but not limited to a disk storage, a CD-ROM, an optical storage, etc.) that include computer-usable program code.

The embodiments of this specification are described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

Alternatively, these computer program instructions can be stored in a computer-readable storage that can instruct a computer or another programmable data processing device to work in a specific way, so that the instructions stored in the computer-readable storage generate an artifact that includes an instruction apparatus. The instruction apparatus implements a specific function in one or more procedures in the flowcharts and/or in one or more blocks in the block diagrams.

Alternatively, these computer program instructions can be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

In a typical configuration, a computing device includes one or more processors (CPUs), one or more input/output interfaces, one or more network interfaces, and one or more memories.

The memory can include a non-persistent memory, a random access memory (RAM), a nonvolatile memory, and/or another form in a computer-readable medium, for example, a read-only memory (ROM) or a flash memory (flash RAM). The memory is an example of the-computer readable medium.

The computer-readable medium includes persistent, non-persistent, removable and non-removable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), a random access memory (RAM) of another type, a read-only memory (ROM), an electrically erasable programmable read-only memory (EEPROM), a flash memory or another memory technology, a compact disc read-only memory (CD-ROM), a digital versatile disc (DVD), or another optical storage, a cassette, a cassette magnetic disk storage, or another magnetic storage device or any other non-transmission medium. The computer storage medium can be configured to store information that can be accessed by the computing device. As described in this specification, the computer-readable medium does not include computer-readable transitory media such as a modulated data signal and a carrier.

It is worthwhile to further note that the terms "include", "comprise", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ... " does not preclude the existence of additional identical elements in the process, method, product, or device that includes the element.

A person skilled in the art should understand that the embodiments of this specification can be provided as methods, systems, or computer program products. Therefore, the one or more embodiments of this specification can use a form of hardware only embodiments, software only embodiments, or embodiments with a combination of software and hardware. In addition, the one or more embodiments of this specification can use a form of a computer program product that is implemented on one or more computer-usable storage media (including but not limited to a disk storage, a CD-ROM, an optical storage, etc.) that include computer-usable program code.

The one or more embodiments of this specification can be described in the general context of computer-executable instructions, for example, a program module. Generally, the program module includes a routine, a program, an object, a component, a data structure, etc. for executing a specific task or implementing a specific abstract data type. Alternatively, the one or more embodiments of this specification can be practiced in distributed computing environments. In the distributed computing environments, tasks are executed by remote processing devices connected by using a communication network. In the distributed computing environments, the program module can be located in a local and remote computer storage medium including a storage device.

The embodiments of this specification are described in a progressive way. For the same or similar parts of the embodiments, mutual references can be made to the embodiments. Each embodiment focuses on a difference from other embodiments. Particularly, the system embodiments are basically similar to the method embodiments, and therefore are described briefly. For related parts, references can be made to some descriptions in the method embodiments.

The above-mentioned descriptions are merely embodiments of this specification, and are not intended to limit this specification. A person skilled in the art can make various changes and variations to this specification. Any modification, equivalent replacement, improvement, etc. made without departing from the spirit and principle of this specification shall fall within the scope of the claims in this specification.

## Claims

1. An offline transaction processing method, applied to a first terminal of a transaction initiator, wherein the method comprises:
obtaining information about a current network connection status of the first terminal for a target transaction;
if the current network connection status of the first terminal is connected, and it is determined that a network connection status of a second terminal of a transaction target party of the target transaction is unconnected, or the current network connection status of the first terminal is unconnected, determining whether the first terminal can output a transaction identification code used to trigger offline transaction processing on the target transaction; and
selecting, based on a determining result indicating whether the first terminal can output the transaction identification code, an offline transaction policy corresponding to the determining result, and performing offline transaction processing on the target transaction between the second terminal based on the selected offline transaction policy.

2. The method according to claim 1, wherein the transaction identification code comprises a graphic code and a code of a biometric feature of a user of the first terminal.

3. The method according to claim 1 or 2, wherein the offline transaction policy comprises one or more of a near field communication (NFC)-based offline transaction policy, a Bluetooth-based offline transaction policy, and a local area network-based offline transaction policy.

4. The method according to claim 3, wherein the selecting, based on a determining result indicating whether the first terminal can output the transaction identification code, an offline transaction policy corresponding to the determining result comprises:
selecting the NFC-based offline transaction policy as the offline transaction policy corresponding to the determining result if the determining result indicates that the first terminal cannot output the transaction identification code.

5. The method according to claim 4, wherein the selecting the NFC-based offline transaction policy as the offline transaction policy corresponding to the determining result if the determining result indicates that the first terminal cannot output the transaction identification code comprises:
selecting the NFC-based offline transaction policy as the offline transaction policy corresponding to the determining result if the determining result indicates that the first terminal is in a powered-off state.

6. The method according to claim 3, wherein the selecting, based on a determining result indicating whether the first terminal can output the transaction identification code, an offline transaction policy corresponding to the determining result comprises:
if the determining result indicates that the first terminal can output the transaction identification code, determining whether the second terminal is in the same local area network as the first terminal; and
if yes, selecting the local area network-based offline transaction policy as the offline transaction policy corresponding to the determining result.

7. The method according to claim 6, wherein the method further comprises:
if the second terminal and the first terminal are in different local area networks, selecting the Bluetooth-based offline transaction policy as the offline transaction policy corresponding to the determining result.

8. The method according to claim 1, wherein the method further comprises:
if the current network connection status of the first terminal is connected and the network connection status of the second terminal is connected, performing online transaction processing on the target transaction between the first terminal and the second terminal by using a connected network.

9. An offline transaction processing apparatus, wherein the apparatus comprises:
a network status acquisition module, configured to obtain information about a current network connection status of the apparatus for a target transaction;
a determining module, configured to: if the current network connection status of the apparatus is connected, and it is determined that a network connection status of a second terminal of a transaction target party of the target transaction is unconnected, or the current network connection status of the apparatus is unconnected, determine whether the apparatus can output a transaction identification code used to trigger offline transaction processing on the target transaction; and
an offline transaction module, configured to select, based on a determining result indicating whether the apparatus can output the transaction identification code, an offline transaction policy corresponding to the determining result, and perform offline transaction processing on the target transaction between the second terminal based on the selected offline transaction policy.

10. An offline transaction processing device, wherein the offline transaction processing device comprises:
a processor; and
a storage, configured to store computer-executable instructions, wherein when the executable instructions are executed, the processor is enabled to perform the following operations:
obtaining information about a current network connection status of the offline transaction processing device for a target transaction;
if the current network connection status of the offline transaction processing device is connected, and it is determined that a network connection status of a second terminal of a transaction target party of the target transaction is unconnected, or the current network connection status of the offline transaction processing device is unconnected, determining whether the offline transaction processing device can output a transaction identification code used to trigger offline transaction processing on the target transaction; and
selecting, based on a determining result indicating whether the offline transaction processing device can output the transaction identification code, an offline transaction policy corresponding to the determining result, and performing offline transaction processing on the target transaction between the second terminal based on the selected offline transaction policy.

11. A storage medium, wherein the storage medium is configured to store computer-executable instructions, and when the executable instructions are executed by a processor, the following procedure is implemented:
obtaining information about a current network connection status of a first terminal for a target transaction;
if the current network connection status of the first terminal is connected, and it is determined that a network connection status of a second terminal of a transaction target party of the target transaction is unconnected, or the current network connection status of the first terminal is unconnected, determining whether the first terminal can output a transaction identification code used to trigger offline transaction processing on the target transaction; and
selecting, based on a determining result indicating whether the first terminal can output the transaction identification code, an offline transaction policy corresponding to the determining result, and performing offline transaction processing on the target transaction between the second terminal based on the selected offline transaction policy.
